# EUROPEAN PATENT APPLICATION

(11) **EP 4 790 616 A1**
(43) Date of publication of application: **12.08.2026**
(21) Application number: 25156647.7
(22) Date of filing: 07.02.2025
(51) Int. Cl.: G06Q 10/0836, A47G 29/14, G07C 9/00

(54) **METHOD AND SYSTEM FOR DETECTING IMPROPER CONDITIONS ON AN AUTOMATED PARCEL MACHINE**

(71) Applicant: SwipBox Development ApS, 6400 Sønderborg (DK)
(72) Inventor: Kaczmarek, Allan, 6400 Sønderborg (DK)
(74) Representative: Patrade A/S

(57) **Abstract**

A method for detecting (100) improper conditions on an automated parcel machine (12), the method (100) comprising steps of:
- measuring (200) sensor data from the automated parcel machine (12);
- identifying (300) improper conditions (155) of the automated parcel machine (12) from the sensor data ;
wherein the improper conditions are one of
- application of graffiti to the automated parcel machine (12);
- burglary attempt;
- a non-latching door;
- a lock unit malfunction;
- near topple of the automated parcel machine;

wherein the step of measuring (200) is performed by means of one or more accelerometers acting as one or more vibration sensors (50); and/or by means of one or more acoustic sensors as one or more vibration sensors (50).

## Description

### Field of the Invention

The present invention relates to a method of detecting improper conditions on an automated parcel machine.

### Background of the Invention

An automated parcel machine comprises a plurality of compartments for storing parcels. The automated parcel machine is an autonomous unit designed for storing parcels until pick-up by a recipient in case of last mile or pick-up by a courier in case of first mile.

Automated parcel machines are typically decentralized, i.e. the automated parcel machines are placed at many positions over a large area such that the automated parcel machines are as close to the recipients as possible. In many cases, a courier delivers parcels to or collects parcels from an automated parcel machine every weekday and in some cases all days of the week. Hence, the automated parcel machine is visual inspected almost daily by the courier, however the courier is not measured on the number of error reports filed, but instead on the number of parcels delivered. Thus, improper conditions and/or damage to the parcel locker is often not reported on the first day of a courier identifying the improper condition and/or damage, hence maintenance takes longer, which can cause the improper conditions and/or damage to simply increase.

In other cases, the reported improper condition is not as severe as reported, i.e. in some cases there is an error in a lock unit which can cause a door to not close which will cause the parcel locker door to flap due to wind. This may cause the courier to report the lock unit to be malfunctioning, however the compartment may be closed when a maintenance person arrives at the automated parcel machine, i.e. the error in the lock unit could mechanically be overcome by the door flapping into the lock unit with enough force. In many of these cases, the lock unit could be fixed by activating a motor of the lock unit or an actuator of the lock unit causing the lock unit to reset to a position enabling the latch to be engaged by the lock unit.

In short, inspection of an automated parcel machine by a courier is unreliable as the courier is paid to deliver parcel lockers. Furthermore, the decentralized position makes maintenance of the parcel locker time consuming due to travel time and in many cases, there is a discrepancy between the reported improper condition and the actual improper condition. Thus, there is a need for a method and system to improve the detecting of improper conditions such as application of graffiti to the automated parcel machine, or burglary attempt, or a non-latching door, or a lock unit malfunction, or near topple of parcel machine. Furthermore, the earlier an improper condition is detected, the better, as the improper condition may cause additional damage or reduce the throughput of parcels.

### Object of the Invention

It is an objective of the invention to provide a method and a system for detecting improper conditions on an automated parcel machine in order to prevent additional damage or prevent a reduction of the throughput of parcels and to further reduce maintenance costs of the automated parcel machine.

### Description of the Invention

An object of the invention is achieved by a method for detecting improper conditions on an automated parcel machine, the method comprising steps of:
- measuring sensor data from the automated parcel machine;
- identifying signatures of improper conditions of the automated parcel machine from the sensor data;

wherein the improper conditions are one of
   - application of graffiti to the automated parcel machine;
   - burglary attempt;
   - a non-latching door;
   - a lock unit malfunction;
   - near topple of the automated parcel machine;
wherein the step of measuring is performed by means of one or more accelerometers acting as one or more vibration sensors, and/or by means of one or more acoustic sensors as one or more vibration sensors.

An automated parcel machine can be installed at many different locations, such as at convenience stores, gas stations, train stations or bus stations, i.e. places having a high throughput of persons, or locations closer to the home of persons such as suburban neighborhoods, at high-rise buildings and similar locations in slipper-distance from homes. The resulting fleet of automated parcel machines is decentralized, hence the total travel distance between all automated parcel machine will in general be very long. A consequence of the decentralized fleet is that a maintenance person will have to travel relatively far to visit the different automated parcel machines which may or may not require maintenance service such as repairing a non-latching door. Furthermore, the decentralized nature also means that the maintenance person does not visit individual service points on a regular basis as the costs would be too great and in general there is no need for maintenance unless a courier or carrier or user reports the automated parcel machine as in the need for maintenance. The courier or carrier is often in a hurry due to being paid per parcel delivered and no compensation is received for reporting a need for maintenance, and thus, there may be performed one or more deliveries of parcels to the automated parcel machine before a courier or carrier reports the need for maintenance if damage to the automated parcel machine is not severe enough for the automated parcel machine to be non-functioning, i.e. a burglary attempt may in some cases only damage one or two doors into respectively one or two compartments.

Furthermore, if an automated parcel machine experiences a near topple, then this is highly unlikely to be reported as it would require a courier or carrier to be at the site to observe the near topple.

The automated parcel machine may be a parcel locker as sold by SwipBox under the brand name "infinity" or "SwipBox classic" or similar parcel lockers.

The automated parcel machine may comprise five or more compartments, wherein each compartment comprises a door and a lock unit for selectively controlling access to individual compartments. The automated parcel machine may be hardwired and/or battery-powered. The automated parcel machine may additionally be equipped with a photovoltaic unit for generating power from electromagnetic waves. The automated parcel machine may comprise a locker chassis surrounding at least part of the fire or more compartments.

The automated parcel machine may comprise a long-range communication unit such as communication via the GSM standard or 3G standard or 4G LTE standard or 5G standard or NB-IOT standard or another standard for similar long-range communication. The long-range communication may be used to communicate with a central server such as a distribution server or similar.

The automated parcel machine may comprise a short-range communication unit such as Bluetooth, or Bluetooth LE, or ZigBee, or NFC, or similar short-range communication. The short-range communication unit may be used to communicate with courier devices or carrier devices or devices belonging to the recipient of a parcel stored within a compartment. The recipient device will typically be a smart phone or tablet. In some embodiments, the automated parcel machine communicates with a central server such as a distribution server or similar using the short-range communication via an external device of a user. An example of such a communication is described in EP3755187B1. The automated parcel machine may comprise a wired connection for wired communication with a central server such as a distribution server.

The step of measuring sensor data may be performed continuously or be performed in case of an event, wherein the event can be opening of a compartment by activating a lock unit or connection with an external unit. The skilled person would know that a sensor will measure in accordance with a preset sampling rate.

In some embodiments, the step of measuring sensor data is performed continuously with a preset repetition rate. The repetition rate may be increased as a function of an event such as opening of a compartment or changes to the gravitational vector or values above a threshold.

The improper conditions may be a person performing application of graffiti to the automated parcel machine. Following detection, the automated parcel machine may send a warning signal to a central server immediately via wired or long-range communication or when a courier/carrier or recipient controls the automated parcel machine via short-range communication. It is evident, that it is preferred, if the warning can be sent as quickly as possible as it will enable identification of the perpetrator by sending a security guard.

The improper conditions may be a burglary attempt, which in many cases will cause tremors or shaking of the automated parcel machine. The specific way of burglary will give different signals, i.e. a crowbar will not generate the same sensor signal as a cutter or cutting torch, however each may be detected. In most instances, the automated parcel machine will only forward a burglary warning as the specific burglary tools are almost irrelevant. It is evident, that it is preferred if the warning can be sent as quickly as possible as it will enable identification of the perpetrator by sending a security guard.

A non-latching door of a compartment will move back-and-forth and sometimes slam into part of the parcel locker. This will give a vibration signal measurable by a vibration sensor, which will be repeated over time due to repeated slamming into the parcel locker. The repetition has been observed to be greater in areas with greater wind speeds.

The one or more acoustic sensors are in the present application not configured to measure sound from the ambient atmosphere but instead configured to measure vibrations traveling through the parcel locker.

The one or more accelerometers are configured to measure vibrations traveling through the parcel locker.

In an aspect, the step of identifying may involve
- spectral analysis of the sensor data; and/or
- statistical analysis of the sensor data; and/or
- pattern recognition of the sensor data; and/or
- using the sensor data as a digital input into a data-driven model providing the improper conditions as digital output.

Different impacts will cause vibrations to dissipate through the parcel locker, which can be detected by one or more sensors.

The origin of the impact and the type of impact will affect the vibration components, such that a spectral analysis will show different spectral distribution depending on the origin, which would be revealed in a spectral analysis of the sensor data. Thereby, the improper condition can be identified by the sensor data.

Likewise, statistical analysis and pattern recognition can be used to identify the type of improper condition.

A data-driven model being trained on sensor data measured on one or more parcel lockers experiencing the improper conditions such as application of graffiti to the automated parcel machine and/or burglary attempt and/or a non-latching door and/or a lock unit malfunction and/or near topple of the automated parcel machine. Part of the sensor data for training may be from parcel lockers in the field i.e. real scenario and/or from parcel lockers with improper conditions performed in a test scenario wherein the improper conditions are induced. In the beginning for the data driven model training data from the test scenario would be the primary source of training data, however it is expected that over time the training data from the field will become a greater and greater part of the training data since it is very hard to predict real life scenarios such as a lock unit malfunction which can happen in a lot of different ways.

The resulting data driven model can take new sensor data as a digital input and provide the improper conditions as digital output. The digital output may be a table with the improper conditions listed in one column and the likelihood listed in the second column. If one of the improper conditions are above a threshold set by a skilled person, then an improper condition has been identified.

In an aspect, the step of identifying may involve identifying spectra by comparing normal spectrum or pre-calibrated spectrum of sensor data with measured sensor data. The normal spectrum or pre-calibrated spectrum of sensor data may be a plural of normal spectra or plural of pre-calibrated spectra.

An automated parcel machine or parcel locker is a stationary device which is not supposed to move by itself, and the automated parcel machine has no means for moving on its own volition. The automated parcel machine will in most cases be mechanically completely passive 99 % of a day if not more than 99 %. The automated parcel machine may have a communication unit with an antenna regularly transmitting, however this is performed without any mechanical movement.

Mainly, the automated parcel machine performs mechanical movement during opening and closing of a compartment. A lock unit of a compartment will upon receiving instructions to open activate a motor which will cause the lock unit to release a latch striker such that the door of the compartment opens. Preferably, this action causes the door to be displaced a bit away from the front of the automated parcel machine such that a user can easily identify the open compartment. There is also a mechanical movement when a user (carrier or courier or recipient) closes the door of the compartment such that latch striker is displaced into the lock unit or vice versa. The closing of the door of the compartment could be performed by the automated parcel machine, however automated parcel machines are rarely adapted to perform this closing action by itself due to increases in complexity and most users know how to close a door.

Both the opening of the door of the compartment and the closing of the door of the compartment will result in vibration in the automated parcel machine. This can be measured and stored as a normal spectrum which can then be used to compare the normal spectrum or pre-calibrated spectrum of sensor data with later measured spectrum of sensor data. A normal spectrum or pre-calibrated spectrum of sensor data may be measured and stored for every compartment as every opening of the door may result in different spectra depending on size of the door of the compartment and the specific location of the compartment within the automated parcel machine. Typically, hundreds if not thousands of automated parcel machines are produced with the same design or at least similar design and in most cases, it will only be necessary to measure a normal spectrum or pre-calibrated spectrum of sensor on a subset of the automated parcel machines.

In an aspect, the step of identifying may be performed locally at the automated parcel machine in connection with measuring sensor data.

The automated parcel machine may comprise a controller comprising a processor and a computer-readable medium. The computer-readable medium may have stored thereon a computer program product comprising instructions causing the processor to perform the steps of the method for detecting improper conditions on an automated parcel machine. The controller being in communication by wire or wireless to the one or more sensors. The computer-readable medium may have stored thereon the data-driven model.

The data amount needed to be sent to a centralized server or third-party device can be severely limited by performing the step of identification at the automated parcel locker as there won't be a need for transmitting measured sensor data, instead data only needs to be sent when the automated parcel machine detects an improper condition or conditions. Thereby, energy is saved as most of the sensor data would be of sensor data of normal condition or of normal operation.

The computer-readable medium may be a non-transitionary computer-readable medium. The computer-readable medium may be a solid state drive or hard disk drive or SD-card or memory card or similar non-volatile computer-readable medium.

In an aspect, the step of measuring may be performed by adjusting a sampling rate of at least one of the vibration sensors as a function of performing a step of opening a compartment of the automated parcel machine. The increase in the sampling rate of at least one of the vibration sensors or several of the vibration sensors or all vibration sensors will improve the sensitivity of the vibration sensors i.e. the measured data becomes of a higher quality.

In an aspect, the step of measuring may be performed by adjusting a sampling rate of at least one of the vibration sensors as a function of sensor data exceeding a threshold value of the sensor data. A burglary attempt will cause several vibration signals going through the automated parcel locker and it is highly likely that one of the first vibration signals will be above a threshold value such that the sensor data is improved, such that the sensor data improves the likely hood of correctly identifying a burglary attempt.

Similarly, a near topple of the automated parcel machine will likely also cause the sensor data to exceed a threshold value. Again, the increase in sampling rate will improve the sensor data enabling an improvement on the likely hood of correctly identifying a near topple of the automated parcel machine. The present invention is not interested in detecting a topple of the automated parcel machine as this means that the damage has happened, instead the present invention works towards preventing a topple by detecting a near topple before the automated parcel machine actually falls over by then retrofitting a wind bracket to the automated parcel machine.

An object of the invention is achieved by a method of operating an automated parcel machine by a step of controlling the automated parcel machine as a function of detected improper conditions according to the method of any one or more of claims 1 to 6.

The step of operating the automated parcel locker may include transferring information to a central server to stop offering compartments for parcel if said compartments are damaged. This can be performed if the automated parcel locker has not been able to resolve the problem in itself.

In an aspect, the step of controlling may involve actuating a motor of the lock unit to change state of lock unit. This will in some cases solve the improper condition of a non-latching door and/or a lock unit malfunction as the actuating of the motor will in some cases cause a reset of the lock unit if the lock unit is not particularly damaged.

In an aspect, the step of controlling may be performed by sending an alarm to a central server. Thereby, the central server will be able to be informed and request or at least enable a request for a maintenance person to go to the automated parcel machine.

An object of the invention is achieved by a system for detecting improper conditions of an automated parcel machine, the system comprising
- an automated parcel machine comprising a chassis, a plurality of compartments, each compartment having a door and a lock unit for controlling access to said compartments through said door;
- one or more sensors providing a sensor data in the form of vibration data, wherein the sensors being accelerometers and/or acoustic sensors;
- means adapted for executing the steps of the method according to any one or more of claims 1 to 9.

Thereby, the system will be able to perform the steps of the previously described method for the same benefit as described earlier.

The one or more sensors may be vibration sensors.

In an aspect, the one or more sensors may be measuring vibrations travelling inside the chassis. The chassis is connected to most parts of the automated parcel machine hence any event causing vibration will most likely also send vibration signals through the chassis i.e. material of the chassis. Thereby, the chassis is a good point to measure and receive good data.

In an aspect, the one or more sensors may be measuring vibrations at the one or more lock units. The lock units are a critical component of the automated parcel machine as the lock units are typically the only parts of an automated parcel machine with a motor and several moving parts, i.e. said lock unit is the part which most often requires maintenance. Hence, more direct measurements increase the precision of the method.

In an aspect, the automated parcel machine may comprise a processor and a computer-readable medium this enables that the automated parcel machine can perform the method according to the invention locally at the automated parcel locker. The automated parcel machine may also include a communication unit such as a wired or wireless communication unit. The communication unit may be configured to communicate with a central server.

The computer-readable medium may be a non-transitionary computer-readable medium. The computer-readable medium may be a solid-state drive or hard disk drive or SD-card or memory card or similar non-volatile computer-readable medium.

An object of the invention is achieved by a computer program comprising instructions to cause the system of any of claims 10 to 13 to execute the steps of the method according to any of claims 1 to 9.

An object of the invention is achieved by a computer-readable medium having stored thereon the computer program of claim 14.

The computer-readable medium may be a non-transitionary computer-readable medium. The computer-readable medium may be a solid state drive or hard disk drive or SD-card or memory card or similar non-volatile computer-readable medium.

### Description of the Drawing

Embodiments of the invention will be described in the figures, whereon:
Fig. 1 illustrates an example of an automated parcel machine with one or more vibration sensors;
Fig. 2 illustrates a compartment;
Fig. 3 illustrates a method for detecting improper conditions on an automated parcel machine; and
Fig. 4 illustrates a method of operating an automated parcel machine by a step of controlling the automated parcel machine.

### Detailed Description of the Invention

| **Item** | **No** |
|---|---|
| System | 10 |
| Automated parcel machine | 12 |
| Chassis | 14 |
| Compartment | 16 |
| Door | 18 |
| Lock unit | 20 |
| Latch | 21 |
| Latch striker | 22 |
| Vibration sensors | 50 |
| Method of detecting | 100 |
| Measuring | 200 |
| Identifying | 300 |
| Method of operating | 400 |
| Controlling | 500 |

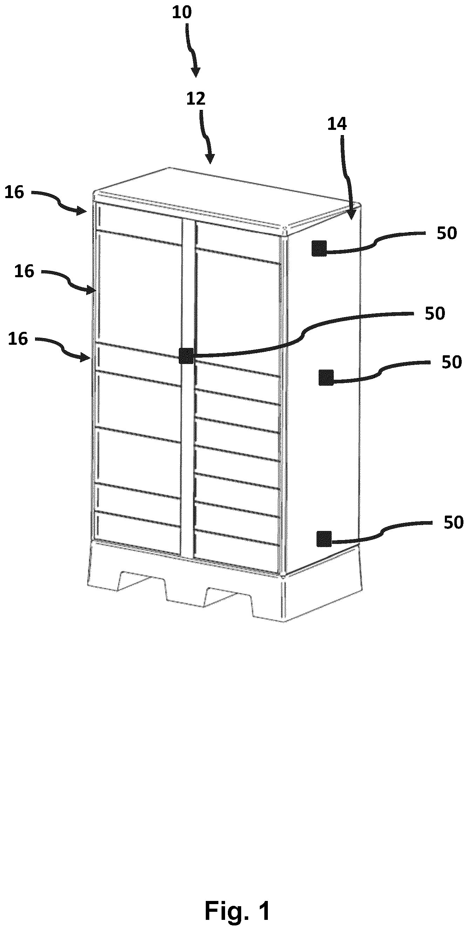

Fig. 1 illustrates an example of an automated parcel machine 12 with one or more vibration sensors 50. The automated parcel machine 12 may also be called a parcel locker 12. In the present description, system 10 is used for the combination of the automated parcel machine 12 and one or more vibration sensors 50.

The system comprises an automated parcel machine 12 comprising a chassis 14, a plurality of compartments 16, each compartment having a door 18 and a lock unit 20 for controlling access to said compartments through said door. The one or more sensors 50 providing a sensor data in the form of vibration data, wherein the one or more sensors 50 being accelerometers and/or acoustic sensors. The one or more sensors 50 may be positioned at various positions.

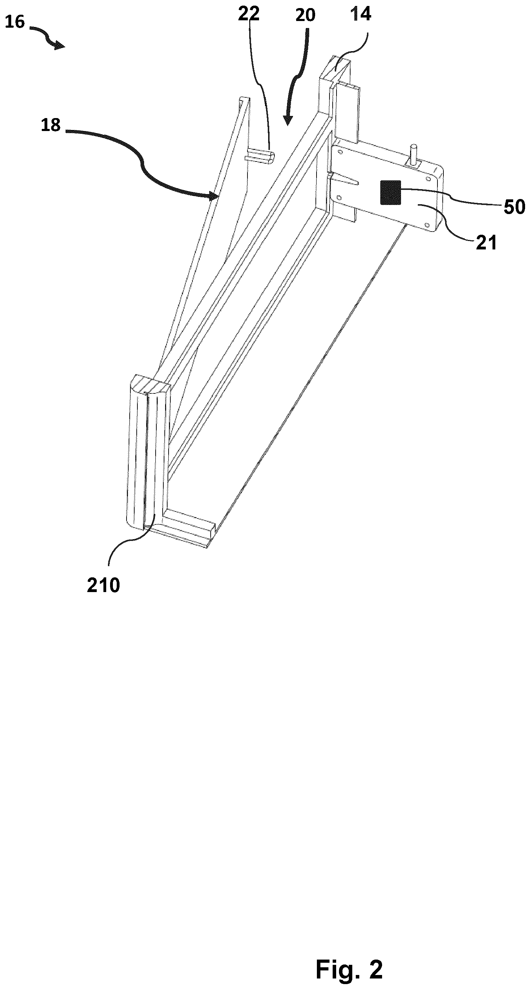

Fig. 2 illustrates a compartment 16. The compartment 16 comprises a door 18 and a lock unit 20 for controlling access to said compartment 16 through said door 18. The compartment 16 is connected to the chassis 14. The lock unit 20 comprises a latch 21 and a latch striker 22. In the shown embodiment the latch striker 22 is connected to the door 18 and the latch 21 is connected to the compartment 16 or chassis 14; however, the reverse could also be true. The lock unit 20 is equipped with a vibration sensor 50.

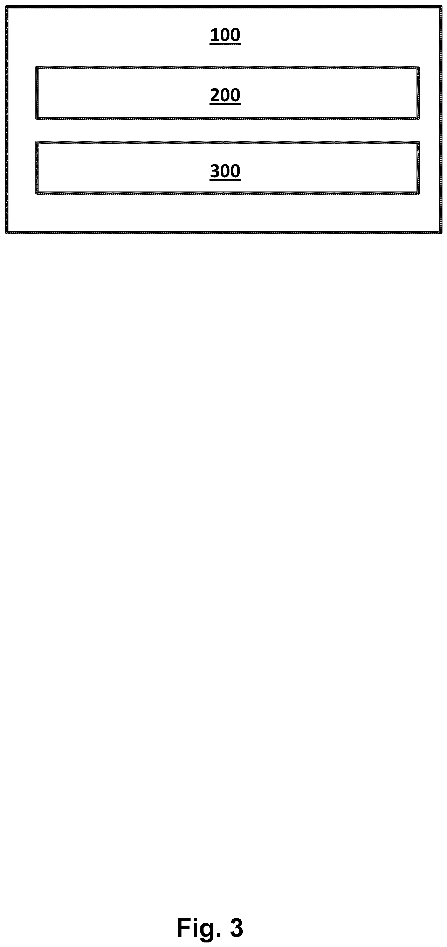

Fig. 3 illustrates a method 100 for detecting improper conditions on an automated parcel machine 12. The method comprises steps of
- measuring 200 sensor data from the automated parcel machine 12;
- identifying 300 improper conditions of the automated parcel machine 12 from the sensor data;

wherein the improper conditions are one of
   - application of graffiti to the automated parcel machine 12;
   - burglary attempt;
   - a non-latching door;
   - a lock unit malfunction;
   - near topple of the automated parcel machine;
wherein the step of measuring 200 is performed by means of one or more accelerometers acting as one or more vibration sensors 50; and/or by means of one or more acoustic sensors as one or more vibration sensors 50.

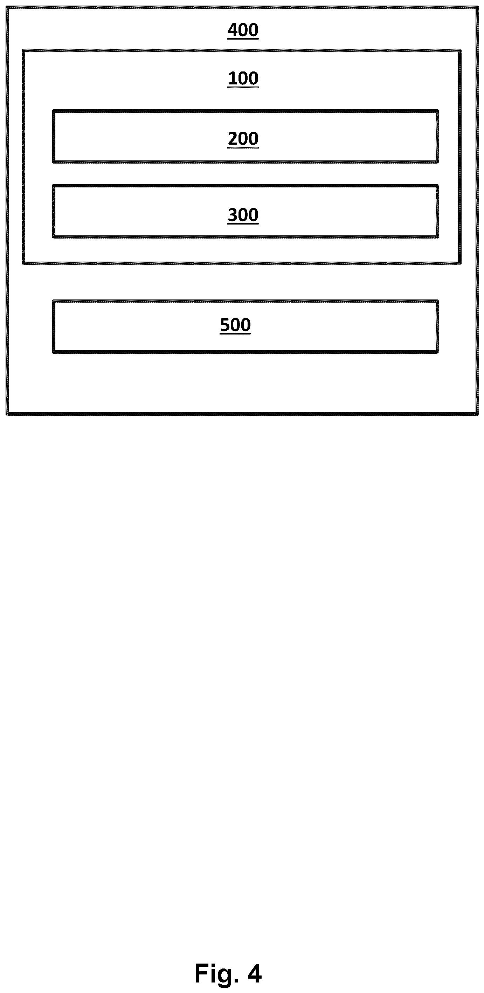

Fig. 4 illustrates a method 400 of operating an automated parcel machine 12 by a step of controlling 400 the automated parcel machine 12. The method of operating 400 an automated parcel machine 12 by a step of controlling 500 the automated parcel machine 12 as a function of detected improper conditions according to the method 100 described in the claims and figure 3.

## Claims

1. A method for detecting (100) improper conditions on an automated parcel machine (12), the method (100) comprising steps of:
- measuring (200) sensor data from the automated parcel machine (12);
- identifying (300) improper conditions of the automated parcel machine (12) from the sensor data;
wherein the improper conditions are one of
- application of graffiti to the automated parcel machine (12);
- burglary attempt;
- a non-latching door;
- a lock unit malfunction;
- near topple of the automated parcel machine;
wherein the step of measuring (200) is performed by means of one or more accelerometers acting as one or more vibration sensors (50); and/or by means of one or more acoustic sensors as one or more vibration sensors (50).

2. The method (100) according to claim 1, wherein the step of identifying (300) involves
- spectral analysis of the sensor data;
- statistical analysis of the sensor data;
- pattern recognition of the sensor data; and/or
- using the sensor data as a digital input into a data-driven model providing the improper conditions as digital output.

3. The method (100) according to claim 1 or 2, wherein the step of identifying (300) involves comparing sensor data of proper conditions or pre-calibrated spectrum with measured sensor data.

4. The method (100) according to any of claims 1 to 3, wherein the step of identifying (300) is performed locally at the automated parcel machine (12) in connection with measuring (200) the sensor data.

5. The method (100) according to any of claims 1 to 4, wherein the step of measuring is performed by adjusting a sampling rate of at least one of the vibration sensors as a function of performing a step of opening a compartment of the automated parcel machine.

6. The method (100) according to any of claims 1 to 5, wherein the step of measuring is performed by adjusting a sampling rate of at least one of the vibration sensors as a function of sensor data exceeding a threshold value of the sensor data

7. A method of operating (400) an automated parcel machine (12) by a step of controlling (500) the automated parcel machine (12) as a function of detected improper conditions according to the method (100) of any of claims 1 to 6.

8. The method (400) according to claim 7, wherein the step of controlling (500) involves actuating a motor of the lock unit to change a state of lock unit.

9. The method (400) according to claim 7 or 8, wherein the step of controlling (500) is performed by sending an alarm to a central server.

10. A system (10) for detecting improper conditions (70) of an automated parcel machine (12), the system comprising
- an automated parcel machine (12) comprising a chassis (14), a plurality of compartments (16), each compartment having a door (18) and a lock unit (20) for controlling access to said compartments through said door;
- one or more sensors providing a sensor data in the form of vibration data, wherein the sensors being accelerometers and/or acoustic sensors;
- means adapted for executing the steps of the method (100,400) according to any one or more of claims 1 to 9.

11. The system (10) according to claim 10, wherein the one or more sensors are measuring vibrations travelling inside the chassis.

12. The system (10) according to claim 10 or 11, wherein the one or more sensors are measuring vibrations at the one or more lock units.

13. The system (10) according to any of claims 10 to 12, wherein the automated parcel machine comprises a processor and a computer-readable medium.

14. A computer program comprising instructions to cause the system of any of claims 10 to 13 to execute the steps of the method (100,400) according to any of claims 1 to 9.

15. A computer-readable medium having stored thereon the computer program of claim 14.
